# EUROPÄISCHE PATENTSCHRIFT

(11) **EP 0 626 552 B1**
(45) Veröffentlichungstag und Bekanntmachung des Hinweises auf die Patenterteilung: **20.03.1996**
(21) Anmeldenummer: 94106649.0
(22) Anmeldetag: 28.04.1994
(51) Int. Cl.: F41B 11/32, F16K 17/06

(54) **Druckgaswaffe**
Air gun
Fusil à air comprimé

(30) Priorität: 11.05.1993 AT 923/93
(43) Veröffentlichungstag der Anmeldung: 30.11.1994
(73) Patentinhaber: STEYR-DAIMLER-PUCH AKTIENGESELLSCHAFT, A-1010 Wien (AT)
(72) Erfinder: Senfter, Emil, A-9900 Lienz (AT)

(56) Entgegenhaltungen:
- DE-B- 1 138 340
- FR-A- 2 097 897
- GB-A- 2 258 913
- US-A- 4 304 213

## Beschreibung

Die Erfindung handelt von einer mit Druckgas betriebenen Schußwaffe, deren Gehäuse eine Vorkammer aufweist, der das Druckgas aus einem an der Waffe abnehmbar angebrachten Druckbehälter zugeführt wird, wobei zwischen Druckbehälter und Vorkammer im Waffengehäuse eine Ventileinheit vorgesehen ist, die in einem Ventilgehäuse ein Druckreduzierorgan und eine hochdruckseitig angebrachte Stellschraube mit achsialer Bohrung aufweist, wobei Druckreduzierorgan und Stellschraube einander zugekehrte zusammenwirkende Dichtflächen aufweisen,

Aus der GB-A 2258913 ist eine Schußwaffe mit festem Druckluftreservoir bekannt, in der dem Schußventil ein Druckreduzierventil mit einer hochdruckseitig angeordneten Stellschraube zur Einstellung des ballistischen Druckes vorgeordnet ist. Die Stellschraube ist jedoch eine ganz gewöhnliche Schraube und kann deshalb keine zusätzliche Sicherungsaufgabe übernehmen. Dieses Dokument beschreibt den Oberbegriff des Anspruchs 1.

Bei Schußwaffen mit abnehmbarem Druckbehälter bedeutet ein Druckreduzierventil aber ein großes Sicherheitsrisiko: Es wirkt als Rückschlagventil, wenn der Druck auf der Hochdruckseite wegfällt. Demzufolge befindet sich aber auch bei abgenommenem Druckbehälter - wenn die Waffe also nicht betriebsbereit erscheint - noch ein für einen Schuß ausreichender Gasvorrat in der Vorkammer. Das kann zu schweren Unfällen führen.

Aus der DE-B-1 138 340 ist eine Druckgaspistole bekannt, bei der eine Druckgaskapsel ohne eigenes Ventil bzw ohne Druckreduzierorgan in die Waffe eingesetzt ist, also gewissermaßen selbst die Vorkammer bildet. Bei dieser Waffe ist zum Druckabbau in der Vorkammer ein von Hand zu betätigender Schieber vorgesehen. Wenn der Schütze diesen in eine bestimmte Stellung bringt und den Abzug betätigt, bleibt das Schußventil durch den Gegendruck geöffnet, bis der Druckabbau erfolgt ist. Ein abnehmbarer Druckbehälter ist nicht vorhanden und der Druckabbau erfolgt durch das Schußventil hindurch. Vor allem aber kann der Schütze auf die Betätigung dieser Vorrichtung vergessen, weil sie nicht automatisch wirkt.

Der Erfindung liegt somit die Aufgabe zugrunde, auch bei abnehmbarem Druckbehälter den sicheren Betrieb mit hohem Druck im Druckbehälter zu ermöglichen und bei dessen Abnehmen mit minimalem Aufwand das selbsttätige Entleeren der Vorkammer sicherzustellen.

Erfindungsgemäß wird das dadurch erreicht, daß der druckbehälterseitige Teil der Stellschraube als gegenüber ihrem Aufnahmeteil abgedichteter Kolben ausgebildet ist und bei Abnehmen des Druckbehälters die Dichtfläche durch Verschiebung der Stellschraube um deren axiales Gewindespiel von der Dichtfläche abhebt und so der Druck in der Vorkammer selbsttätig abgebaut wird.

Die waffenseitige Anordnung des Ventiles erlaubt es, weiterhin die bis dahin benutzten Druckbehälter zu benutzen, und die Einstellung des Druckes in der Vorkammer an der Waffe selbst durch Verstellen der direkt mit der Dichtfläche zusammenwirkenden Stellschraube in Achsrichtung vorzunehmen.

Die Stellschraube hat somit die folgende Wirkung: Bei Abnahme des Druckbehälters fällt die auf die hochdruckseitig angeordnete Stellschraube auf den Kolben wirkende Kraft weg. Dadurch verschiebt sich die Stellschraube um das Gewindespiel vom Druckreduzierorgan weg, ihre Dichtfläche hebt ab und gibt so kurzzeitig die Verbindung zur Vorkammer frei. Dadurch wird der Druck in der Vorkammer durch die achsiale Bohrung der Stellschraube hindurch abgebaut. Das normale Gewindespiel gewährleistet einen ausreichend raschen und doch gedämpften Druckabbau in beispielsweise einer halben Sekunde.

In der konventionellen Pneumatik sind zwar Anordnungen zum Abbau des Druckes auf der Druckseite eines Rückschlagventiles bekannt, bei einem Druckreduzierventil erfordern diese aber aufwendige Maßnahmen, weitere Kanäle und zumindest ein weiteres Ventil.

In einer vorteilhaften Ausbildung der Erfindung ist das Ventilgehäuse auch die Aufnahme für den Druckgasbehälter und ist in das Waffengehäuse einsetzbar (Anspruch 2). So braucht das Ventil keinen zusätzlichen Bauraum und kann einfach an die Stelle der bei einer Waffe nach dem Stand der Technik vorhandenen Aufnahme treten, es ist also nachrüstbar.

In einer bevorzugten Weiterbildung der Erfindung ist das Druckreduzierorgan ein mit der Stellschraube koaxialer federbelasteter Stufenkolben (Anspruch 3). Man erhält so ein raumsparendes, zuverlässiges und verschleißfreies Ventil, das zudem eine sehr genaue Einstellung des Vorkammerdruckes erlaubt.

Schließlich kann die Stellschraube hochdruckseitig noch von einer Sicherungsplatte abgedeckt sein (Anspruch 4), ohne natürlich den Gasaustritt ganz zu sperren. Dadurch und ggf noch durch Plombieren kann ein Verstellen durch Unbefugte verhindert werden.

Im folgenden wird die Erfindung anhand von Figuren erläutert. Es stellen dar:
- Fig.l:: Eine gattungsgemäße Schußwaffe nach dem Stand der Technik.
- Fig.2:: Detail A in Figur 1, jedoch in der erfindungsgemäßen Ausbildung und stark vergrößert, in einer ersten Stellung.
- Fig.3:: Wie Fig.2, in einer zweiten Stellung.
- Fig.4:: Eine schematische Skizze zur Erläuterung der Wirkungsweise.

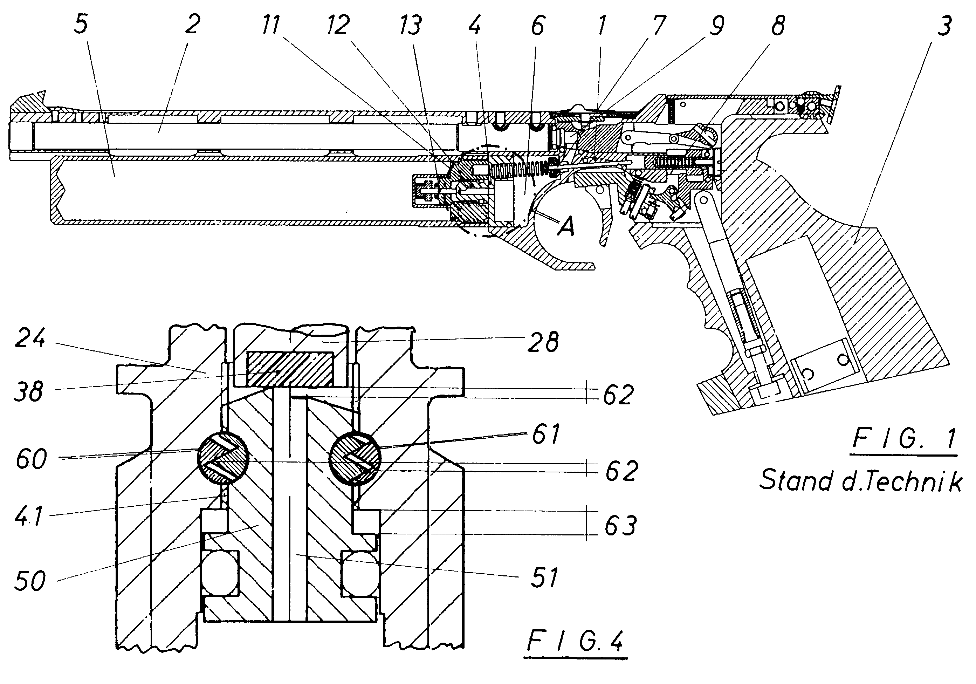

Die in Fig.1 dargestellte Druckgaspistole nach dem Stand der Technik besteht aus einem Gehäuse 1 mit Lauf 2, das in einem Griffstück 3 befestigt ist. In einer kreisförmigen Öffnung des Gehäuses 1 unter dem Lauf 2 ist ein Aufnahmestück 4 befestigt, das der Aufnahme eines Druckgasbehälters 5 dient. Die Aufnahme 4 bildet im Gehäuse 1 eine Vorkammer 6, von der aus das Druckgas über ein von einem im Detail nicht beschriebenen Hahnschlagmechanismus 8 betätigte Ventil 7 in einen Laderaum 9 für das Geschoß strömt.

Der Druckgasbehälter 5 weist an seiner dem Gehäuse 1 zugekehrten Seite ein Bodenstück 12 mit einem Ventil 13 auf und wird zur Befestigung auf eine Nase 11 der Aufnahme 4 geschraubt. Dabei wird das Ventil 13 geöffnet und das Druckgas gelangt in die Vorkammer 6.

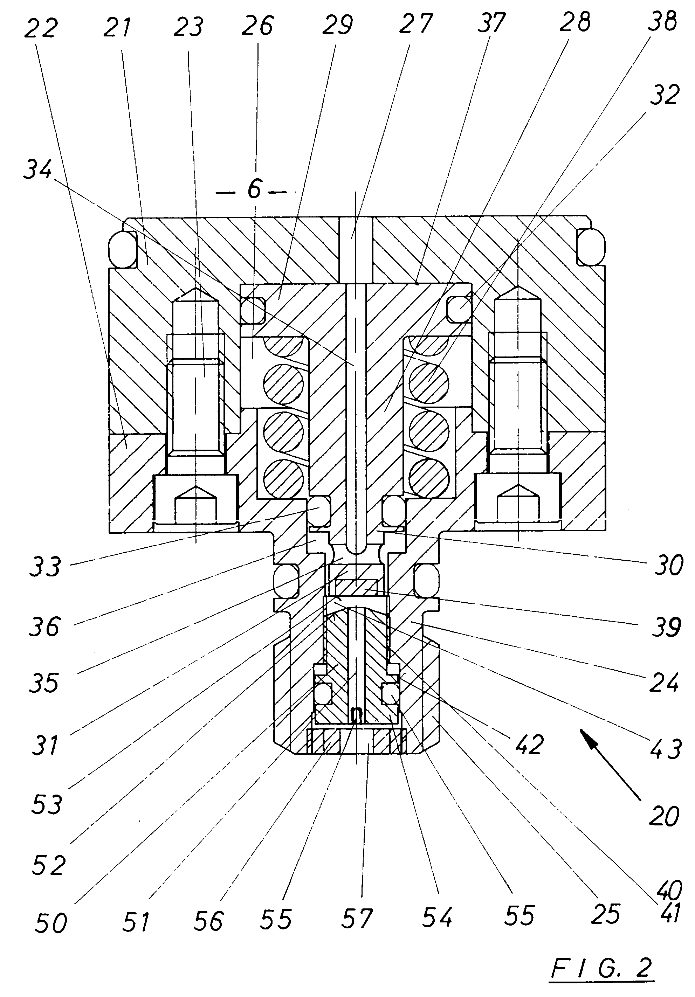

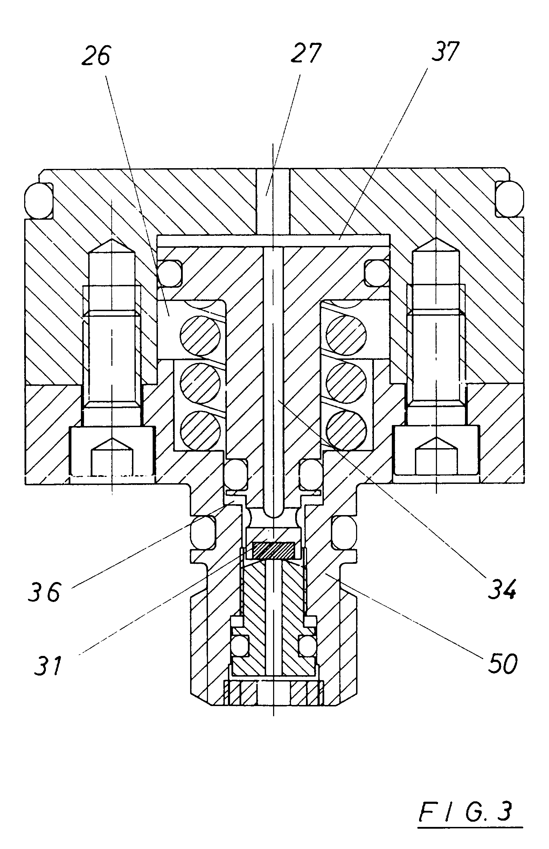

Erfindungsgemäß tritt anstelle der Aufnahme 4 die in Figur 2 und 3 dargestellte Ventileinheit 20. Sie besteht aus einem Gehäuse 21 und aus einem Deckel 22, an den ein Aufnahmeteil 24 mit einem Gewinde 25 anschließt, auf das der hier nicht dargestellte Druckgasbehälter aufgeschraubt ist. Gehäuse 21 und Deckel 22 sind mit Schrauben 23 verbunden und bilden in ihrem Inneren eine Kammer 26, in der abgedichtet ein Stufenkolben 28 in Achsrichtung geführt ist. Die Kammer 26 steht über eine achsiale Bohrung 27 mit der Vorkammer 6 in Verbindung.

Der Stufenkolben besteht aus einem ersten Kolbenteil großen Durchmessers 29, einem zweiten Kolbenteil geringeren Durchmessers 30 und einem Druckreduzierorgan 31. Die Kolbenteile 29,30 sind mittels Dichtungen 32,33 gegenüber den Gehäuseteilen 21,22 abgedichtet. Im Inneren des Stufenkolbens 28 ist eine achsiale Bohrung 34 vorgesehen, die über eine Querbohrung 35 zwischen dem zweiten Kolbenteil 30 und dem Druckreduzierorgan 31 in einem ersten Raum 36 mündet, dessen Außendurchmesser gleich dem Durchmesser des zweiten Kolbenteiles ist. Zwischen erstem Kolbenteil 29 und dem Gehäuse 21 ist ein zweiter Raum 37 (nur in Figur 3 zu sehen) gebildet, dessen Außendurchmesser gleich dem Durchmesser des ersten Kolbenteiles 29 ist. Der Stufenkolben 28 wird von einer Schraubenfeder 38 in Richtung auf den zweiten Raum 37 gedrückt.

An den ersten Raum 36 schließt eine in den Aufnahmeteil 24 führende Bohrung 40 an, die ein Gewinde 41 aufweist und sich in einer Bohrung 42 etwas größeren Durchmessers fortsetzt. In das Gewinde 41 ist eine eine achsiale Bohrung 51 aufweisende Stellschraube 50 eingeschraubt. Eine am oberen Ende dieser Stellschraube ausgebildete konische Dichtfläche 52 wirkt mit einer Dichtfläche 53 des Stufenkolbens zusammen, die aus einem Einsatz 39 aus geeignetem Material, etwa einem Kunststoff besteht. Zwischen den beiden Dichtflächen 52,53 ist ein dritter Raum 43 ausgebildet.

Der dem Stufenkolben 28 abgewandte Teil der Stellschraube 50 ist zu einem Dichtkolben 54 mit entsprechender Dichtung 55 erweitert, der in der Bohrung 42 des Aufnahmeteiles 24 geführt ist. Die Stellschraube 54 weist weiters einen Schraubenschlitz 55 zum Verstellen auf. Am äußeren Ende des Aufnahmeteils 24 ist schließlich noch eine Sicherungsplatte 56 mit einer achsialen Bohrung 57 auf geeignete Weise befestigt, etwa eingeschraubt und gegebenenfalls plombiert oder verstemmt.

Die beschriebene Ventileinheit 20 kann gleichermaßen in einer Pistole nach Fig.1 oder in einem Druckgasgewehr verwendet werden.

Im folgenden wird die Arbeitsweise der Ventileinheit 20 beschrieben. Fig.2 zeigt die drucklose Stellung, in der kein Druckbehälter auf den Aufnahmeteil 24 geschraubt und die Vorkammer 6 drucklos ist. Der Stufenkolben 28 wird von der Feder 38 nach oben gedrückt und das Druckreduzierorgan 31 ist von der konischen Dichtfläche 52 der Stellschraube 50 abgehoben.

Wird nun ein Druckgasbehälter 5 auf das Gewinde 25 geschraubt, so strömt Gas unter hohem Druck durch die achsiale Bohrung 51 der Stellschraube 50 in den dritten Raum 43, von dort am Druckreduzierorgan 31 vorbei in den zweiten Raum 36 und von dort weiter durch die Bohrungen 35,34 im Stufenkolben 28 und durch die Bohrung 27 im Gehäuse 21 in die Vorkammer 6. Wenn der Druck in der Vorkammer 6 ausreichend hoch ist, geht die Ventileinheit 20 in die in Fig.3 gezeigte Stellung über.

Die Stellung der Fig.3 wird dadurch erreicht, daß der Druck in der Vorkammer 6 auf den ersten Kolbenteil 29 mit der großen Fläche wirkt und den Stufenkolben 28 mit seinem Druckreduzierorgan 31 gegen die konische Dichtfläche 52 der Stellschraube 50 drückt. Der Druck, bei dem das geschieht, ist durch Verdrehen der Stellschraube 50 einstellbar. Je tiefer die Stellschraube 50 in das Gewinde 41 eingeschraubt ist, desto kürzer ist der Hub des Stufenkolbens gegen die Kraft der Feder 38 und bei desto niedrigerem Vorkammerdruck tritt das ein.

Da auf den Dichtkolben 54 der Stellschraube 50 der höhere Druck im Druckgasbehälter 5 wirkt, wirkt auf die Stellschraube 50 eine zum Stufenkolben hin gerichtete Kraft, die das Gewinde 41 in seinem Gewindespiel in die auf der linken Seite der Figur 4 symbolisch dargestellte Lage bringt. Der innerhalb des Kreises 60 abgebildete Schnitt durch das Gewinde ist stark vergrößert, um diesen Sachverhalt zu verdeutlichen.

Wird nun der Druckgasbehälter abgenommen, so fällt der auf den Dichtkolben 54 wirkende Druck weg und der Druck im dritten Raum 43 gewinnt die Oberhand. Auf der rechten Seite der Fig.4 ist zu sehen, daß dadurch die Stellschraube 50 um das Gewindespiel 51 kurzzeitig nach unten bewegt wird, wodurch Gas zwischen den Dichtflächen 52,53 hindurchströmen kann. Dadurch nimmt der auf den ersten Kolben 29 wirkende Druck in der Vorkammer 6 soweit ab, daß sich der Stufenkolben 28 nach oben bewegt und den Durchgang zwischen den Dichtflächen 52,53 schließlich ganz freigibt. Die Ventileinheit 20 ist somit vollkommen selbsttätig in die in Figur 2 gezeigte drucklose Grundstellung zurückgekehrt.

Vergleich der beiden Kreise 60,61 zeigt das Axialspiel 62 des Gewindes 41, um das sich die Stellschraube 50 bei Wechsel der Kraftrichtung abwärts bewegt. Es ist zu beachten, daß der Abstand 63 zwischen der oberen Kante des Dichtkolbens 54 und dem Beginn des Gewindes 41 nicht verschwinden darf, damit die Stellschraube 50 nicht ihr funktionswesentliches Spiel einbüßt.

## Patentansprüche

1. Mit Druckgas betriebene Schußwaffe, deren Gehäuse (1) eine Vorkammer (6) aufweist, der das Druckgas aus einem an der Waffe abnehmbar angebrachten Druckbehälter (5) zugeführt wird, wobei zwischen Druckbehälter (5) und Vorkammer (6) im Waffengehäuse (1) eine Ventileinheit (20) vorgesehen ist, die in einem Ventilgehäuse (21,22) ein Druckreduzierorgan (31) und eine hochdruckseitig angebrachte Stellschraube (50) mit achsialer Bohrung (51) aufweist, wobei Druckreduzierorgan (31) und Stellschraube (50) einander zugekehrte zusammenwirkende Dichtflächen (52,53) aufweisen, **dadurch gekennzeichnet**, daß der druckbehälterseitige Teil der Stellschraube (50) als gegenüber ihrem Aufnahmeteil (24) abgedichteter Kolben ausgebildet ist und bei Abnehmen des Druckbehälters (5) die Dichtfläche (52) durch Verschiebung der Stellschraube (50) um deren axiales Gewindespiel (62) von der Dichtfläche (53) abhebt und so der Druck in der Vorkammer (6) selbsttätig abgebaut wird.

2. Schußwaffe nach Anspruch 1, **dadurch gekennzeichnet**, daß das Ventilgehäuse die Aufnahme für den Druckgasbehälter bildet und in das Waffengehäuse einsetzbar ist.

3. Schußwaffe nach Anspruch 1, **dadurch gekennzeichnet**, daß das Druckreduzierorgan (31) ein mit der Stellschraube (50) koaxialer federbelasteter Stufenkolben (28) ist.

4. Schußwaffe nach Anspruch 1, **dadurch gekennzeichnet**, daß die Stellschraube (50) hochdruckseitig von einer Sicherungsplatte (56) abgedeckt ist.

## Claims

1. Gas operated shooting arm with a casing (1) containing an antechamber (6) supplied with pressurized gas from a pressurized gas container (5) removably attached to the arm, a valve unit (20) being arranged in the casing (1) between the pressurized gas container (5) and the antechamber (6), the valve unit comprising a valve housing (21,22) and therein a pressure reducer (31) and, on the high pressure side, an adjusting screw (50) with an axial bore (51), a pressure reducer (31) and an adjusting screw (50) having two cooperating sealing surfaces (52,53) facing each other, **caracterized** in that the pressurized gas container side of the adjusting screw (50) is shaped as a piston sealed with regard to its socket (24), and upon removing the pressurized gas container (5), the sealing surface (52) is lifted from the sealing surface (53) by shifting of the adjusting screw (50) through the axial play of the thread (62), whereby the antechamber (6) is automatically depressurized.

2. Shooting arm according to claim 1, **caracterized** in that the valve housing (21,22) comprises the socket for the pressurized gas container (5) and is insertable into the casing of the arm.

3. Shooting arm according to claim 1, **caracterized** in"that the pressure reducer (31) is a spring-loaded differential piston (28) coaxial with the adjusting screw (50).

4. Shooting arm according to claim 1, **caracterized** in that the adjusting screw (50) is covered by a safety plate (56) on the high pressure side.

## Revendications

1. Arme de tir à gaz comprimé dont le boitier (1) comporte une antichambre (6) alimentée en gaz comprimé à partir d'un réservoir à pression (5) attaché à l'arme de façon amovible, un ensemble de valve (20) étant prévu dans le boitier (1) entre le réservoir à pression (5) et l'antichambre (6), cet ensemble comportant dans un carter de valve (21,22) un organe réducteur de pression (31) et une vis de réglage (50) disposée du coté haute pression et présentant un alésage axial (51), l'organe réducteur de pression (31) et le vis de réglage (50) ayant des faces d'étanchéité (52,53) en regard l'une de l'autre, **caractérisée** en ce que la partie de la vis de réglage (50) du coté du réservoir à pression est conçu comme piston étanché en regard de son recepteur (24) et que, lorsque le réservoir à pression (5) est enlevé, la face d'étanchéité (52) est soulevée de la face d'étanchéité (53) par translation de la vis de réglage (50) par son jeu de filetage axial (62), ainsi dépressurisant automatiquement l'antichambre (6).

2. Arme de tir selon la revendication 1, **caractérisée** en ce que le carter de valve (21,22) constitue le recepteur du réservoir à pression (5) et est susceptible d'être monté dans le boitier de l'arme.

3. Arme de tir selon la revendication 1, **caractérisée** en ce que l'organe réducteur de pression (31) est un piston étagé (28) solicité par un ressort, coaxial avec la vis de réglage (50).

4. Arme de tir selon la revendication 1, **caractérisée** en ce que la vis de réglage (50) est recouverte du coté haute pression par un disque de sécurité (56).
